# EUROPEAN PATENT APPLICATION

(11) **EP 3 200 092 A1**
(43) Date of publication of application: **02.08.2017**
(21) Application number: 14884986.2
(22) Date of filing: 26.11.2014
(51) Int. Cl.: G06F 17/30

(54) **METHOD AND TERMINAL FOR IMPLEMENTING IMAGE SEQUENCING**

(30) Priority: 22.09.2014 CN 201410487831
(71) Applicant: ZTE Corporation, Shenzhen, Guangdong 518057 (CN)
(72) Inventor: YAN, Shiqin, Shenzhen Guangdong 518057 (CN); LU, Xiazi, Shenzhen Guangdong 518057 (CN); WANG, Junfeng, Shenzhen Guangdong 518057 (CN); HU, Xiaoyu, Shenzhen Guangdong 518057 (CN)
(74) Representative: Lavoix
(86) International application number: PCT/CN2014/092288
(87) International publication number: WO 2015/131571

(57) **Abstract**

Disclosed are a method and a terminal for implementing image sequencing. The method includes: analysing an eye feature of a user when the user reviews images, so as to obtain and record duration for which the user reviews each of the images; and performing sequencing on the images according to the recorded duration for which the user reviews each of the images. The technical solution of the disclosure analyses the eye feature of the user when reviewing images, obtains the durations for which the user reviews the images, and performs sequencing on images of interest to the user by means of the durations so as to enable the images of interest to the user to be ranked higher, thereby increasing the efficiency by which a user reviews images, and improving user experience.

## Description

### TECHNICAL FIELD

The disclosure relates to the technique for implementing image sequencing, and in particular to a method and a terminal for implementing image sequencing.

### BACKGROUND

Along with the continuous development of the camera function of terminals, such as mobile phones, tablets and the like, more and more users are accustomed to taking photos by means of mobile phones, tablets, and so on, and storing a large number of images in the mobile phones for browsing in case of need. When more or more images are stored in terminal devices, it becomes more and more time-consuming for a user to find the image of interest to the user.

At present, images stored in terminal devices are sequenced and sorted mainly according to photographing time, photographing place, and so on. When a user intends to review the stored images, the user has to review all albums one by one in an order of generation thereof so as to find the location of the image for image browsing. That is, the method of sequencing images in the related mobile terminal is not beneficial to searching for images efficiently, and affects the user experience of using the terminal by the user.

In summary, in the current image sequencing method, a user has to review a large number of images to find the image of interest, which is low in efficiency and affects the user experience.

### SUMMARY

In order to solve the above-mentioned problems, the disclosure provides a method and a terminal for implementing image sequencing, and can improve the efficiency of browsing the image of interest by a user and improve the user experience.

To this end, the following technical solutions are adopted.

A method for implementing image sequencing includes:
analysing an eye feature of a user when the user reviews images, so as to obtain and record duration for which the user reviews each of the images; and
performing sequencing on the images according to the recorded duration for which the user reviews each of the images.

Optionally, the step of analysing the eye feature of the user so as to obtain the duration for which the user reviews each of the images includes:
obtaining the facial information of the user, extracting the eye feature of the user from the facial information, and recording the time when the user reviews each of the images after performing analysis to obtain the duration for which the user reviews each of the images.

Optionally, the step of analysing the eye feature of the user so as to obtain the duration for which the user reviews each of the images includes:
detecting a location region, a center of a pupil, iris information and a line-of-sight direction of an eyeball in the eye feature through an eyeball recognition technique so as to perform analysis of the eye feature; and
obtaining and recording the time when the user reviews each of the images according to the location region, the center of the pupil, the iris information and the line-of-sight direction of the eyeball in the eye feature, so as to obtain the duration for which the user reviews each of the images.

A terminal includes an analysis recording unit and a sequencing unit.

The analysis recording unit is arranged to analyse an eye feature of a user when the user reviews images, so as to obtain and record duration for which the user reviews each of the images; and
the sequencing unit is arranged to perform sequencing on the images according to the recorded duration for which the user reviews each of the images.

Optionally, the analysis recording unit is arranged to analyse the eye feature of the user in the following manner so as to obtain the duration for which the user reviews each of the images:
obtaining the facial information of the user, extracting the eye feature of the user from the facial information, analysing the eye feature of the user, and obtaining the time when the user reviews each of the images to obtain and record the duration for which the user reviews each of the images.

Optionally, the analysis recording unit is specifically arranged to analyse the eye feature of the user in the following manner so as to obtain the duration for which the user reviews each of the images:
detecting a location region, a center of a pupil, iris information and a line-of-sight direction of an eyeball in the eye feature through an eyeball recognition technique so as to perform analysis of the eye feature; and
obtaining the time when the user reviews each of the images according to the location region, the center of the pupil, the iris information and the line-of-sight direction of the eyeball in the eye feature, so as to obtain and record the duration for which the user reviews each of the images.

A computer program includes program instructions which, when executed by a computer, cause the computer to execute any of the abovementioned methods for implementing image sequencing.

A carrier carrying the computer program is provided.

Compared with the related art, the technical solution provided by the disclosure includes: analysing an eye feature of a user when the user reviews images, so as to record duration for which the user reviews each of the images; and performing sequencing on the images according to the recorded duration for which the user reviews each of the images. The embodiments of the disclosure analyse the eye feature of the user when reviewing images, obtain the durations for which the user reviews the images, and perform sequencing on images of interest to the user by means of the durations, thereby enabling the images of interest to the user to be ranked higher. The efficiency by which a user reviews images is increased, and user experience is improved.

### BRIEF DESCRIPTION OF THE DRAWINGS

The accompanying drawings are described to provide a further understanding of the technical solutions of the present application and form a part of the specification for the purpose of explaining the technical solutions of the present application together with the embodiments of the present application without forming limits to the technical solutions of the present application.
Fig. 1 is a flowchart showing a method for implementing image sequencing according to an embodiment of the disclosure.
Fig. 2 is a structural block diagram illustrating a terminal according to an embodiment of the disclosure.

### DETAILED DESCRIPTION

The embodiments of the present application are described below with reference to the drawings in detail so that the purpose, technical solutions and advantages of the present application are more clearly understood. It is noted that the embodiments of the present application and the features in the embodiments may be arbitrarily combined with each other without conflicts.

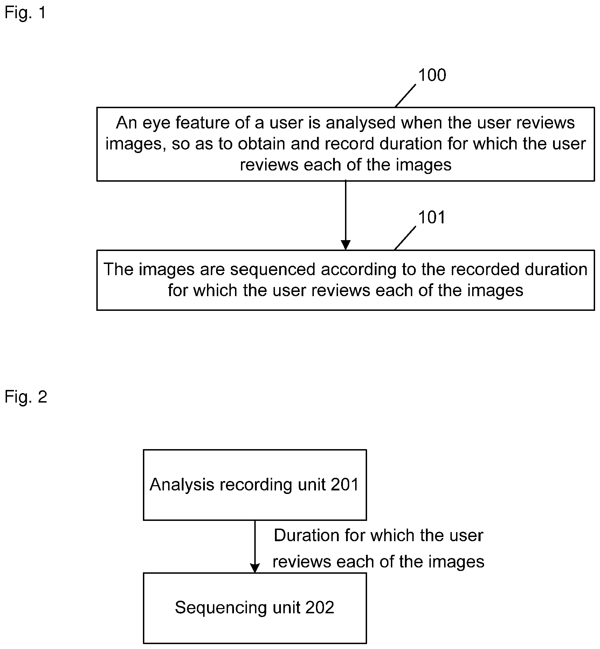

Fig. 1 is a flowchart illustrating a method for implementing image sequencing according to an embodiment of the disclosure. As shown in Fig. 1, the method includes the following steps.

Step 100: An eye feature of a user is analysed when the user reviews images, so as to obtain and record duration for which the user reviews each of the images.

In this step, analysing an eye feature of a user so as to record duration for which the user reviews each of the images specifically includes:
obtaining the facial information of the user, extracting the eye feature of the user from the facial information, and recording the time when the user reviews each of the images after performing analysis to obtain the duration for which the user reviews each of the images.

It is to be noted that obtaining the facial information of the user is implemented in the related terminal mainly through the front camera of the terminal, and extracting the eye feature of the user from the facial information is implemented according to the feature extracting method in the related image processing technique. After successfully obtaining the facial information of the user, the related technique will perform face detection and face feature recognition. As for the face detection, it detects whether there is a face among a variety of different image scenes and determines its specific location. There are three commonly used methods for face detection. The first method is based on the grey-scale template matching of the overall face. The second method is an artificial neural network method. The third method is a skin color detection method. In practice, different methods may be combined for use to improve the efficiency of face detection. As for the face feature recognition, it detects the location of the main face feature of the face and the shape information of an eye, a mouth and other major organs. The commonly used methods for the face feature recognition include a grey integral projection curve analysis, a template matching, a deformable template, a Hough transform, a Snake operator, an elastic graph matching technique based on Gabor wavelet transform, an active character model and an active appearance model, and so on. In the embodiment, it is determined whether the user is reviewing images by identifying the eye feature in the facial information and the duration for which the user reviews the image is recorded.

In this step, analysing the eye feature of the user so as to obtain the duration for which the user reviews each of the images includes:
detecting the location region, the center of a pupil, iris information and the line-of-sight direction of an eyeball in the eye feature through an eyeball recognition technique so as to perform analysis of the eye feature; and
obtaining and recording the time when the user reviews each of the images according to the location region, the center of a pupil, iris information and the line-of-sight direction of an eyeball in the eye feature, so as to obtain the duration for which the user reviews each of the images.

The eyeball recognition technique is incorporated into the embodiments of the present disclosure. The so-called eye recognition technique uses a detection algorithm to identify or mark the location region, the center of a pupil, iris information, the line-of-sight direction, and other information of an eyeball in the static image. There are four commonly used methods for eyeball recognition technique: a projection method, a Hough transform method, an AdaBoost classifier and a template matching method. In the present example, the time when the user reviews each of the images can be determined by the location region, the center of a pupil, iris information and the line-of-sight direction of an eyeball so as to obtain the duration for which the user reviews each of the images. The embodiment of the present disclosure introduces the analysis on the information of the line-of-sight direction so as to determine whether the user is gazing at the image and improve the accuracy of the duration information.

Step 101: The images are sequenced according to the recorded duration for which the user reviews each of the images.

It should be noted that photos are sequenced according to the reviewing durations, mainly including determining the degree of browsing and attention to the photos by the durations of reviewing images and achieving the determination about whether the images are ranked higher. In general, the images which are reviewed for a long duration are the images of interest to the user and should be ranked higher according to the method in the embodiments of the present disclosure.

In this way, after performing sequencing the images based on the degree of attention of the user, the images of more interest to the user will be inevitably ranked higher when the user browses images. Thus, the user can quickly find the image of interest when the user opens the entire page of the images. Therefore, the efficiency that the user browses images of interest is increased, and user experience is improved.

Fig. 2 is a structural block diagram illustrating a terminal according to an embodiment of the disclosure. As shown in Fig. 2, the terminal includes an analysis recording unit 201 and a sequencing unit 202.

The analysis recording unit 201 is arranged to analyse an eye feature of a user when the user reviews images, so as to obtain and record duration for which the user reviews each of the images.

The analysis recording unit 201 is specifically arranged to obtain the facial information of the user, extract the eye feature of the user from the facial information, analyse the eye feature of the user, and obtain the time when the user reviews each of the images to obtain and record the duration for which the user reviews each of the images.

The analysis recording unit 201 is specifically arranged to detect the location region, the center of a pupil, iris information and the line-of-sight direction of an eyeball in the eye feature for performing analysis of the eye feature through an eyeball recognition technique; and
obtain the time when the user reviews each of the images according to the location region, the center of a pupil, iris information and the line-of-sight direction of an eyeball in the eye feature, so as to obtain and record the duration for which the user reviews each of the images.

The sequencing unit 202 is arranged to perform sequencing on the images according to the recorded duration for which the user reviews each of the images.

It should be noted that the terminal of the embodiment of the disclosure can also be used as a module provided on a mobile phone, a tablet, a camera, a portable computer, and related terminals having a function of taking images so as to achieve effectively sequencing images.

The embodiments of the disclosure also disclose a computer program, including program instructions which, when executed by a computer, cause the computer to execute any of the above methods for implementing image sequencing.

A carrier carrying the computer program is provided.

Although the embodiments disclosed in the present application are as described above, the above content is the embodiment used merely for readily understanding the present application and is not intended to limit the present application as embodied in the embodiments of the disclosure. It will be apparent to those skilled in the art that various modifications and variations can be made in the implementation forms and details without departing from the spirit and scope of the present application. However, the scope of protection of the present application is still in accordance with the claims.

### INDUSTRIAL APPLICABILITY

The embodiments of the disclosure analyse the eye feature of the user when reviewing images, obtain the durations for which the user reviews the images, and performs sequencing on images of interest to the user by means of the durations, thereby enabling the images of interest to the user to be ranked higher. The efficiency that a user reviews images is increased, and user experience is improved. Therefore, the disclosure has a great industrial applicability.

## Claims

1. A method for implementing image sequencing, comprising:
analysing an eye feature of a user when the user reviews images, so as to obtain and record duration for which the user reviews each of the images; and
performing sequencing on the images according to the recorded duration for which the user reviews each of the images.

2. The method for implementing image sequencing according to claim 1, wherein the step of analysing the eye feature of the user so as to obtain the duration for which the user reviews each of the images comprises:
obtaining the facial information of the user, extracting the eye feature of the user from the facial information, and recording the time when the user reviews each of the images after performing analysis to obtain the duration for which the user reviews each of the images.

3. The method for implementing image sequencing according to claim 1 or 2, wherein the step of analysing the eye feature of the user so as to obtain the duration for which the user reviews each of the images comprises:
detecting a location region, a center of a pupil, iris information and a line-of-sight direction of an eyeball in the eye feature through an eyeball recognition technique so as to perform analysis of the eye feature; and
obtaining and recording the time when the user reviews each of the images according to the location region, the center of the pupil, the iris information and the line-of-sight direction of the eyeball in the eye feature, so as to obtain the duration for which the user reviews each of the images.

4. A terminal comprising: an analysis recording unit and a sequencing unit, wherein the analysis recording unit is arranged to analyse an eye feature of a user when the user reviews images, so as to obtain and record duration for which the user reviews each of the images; and
the sequencing unit is arranged to perform sequencing on the images according to the recorded duration for which the user reviews each of the images.

5. The terminal according to claim 4, wherein the analysis recording unit is arranged to analyse the eye feature of the user in the following manner so as to obtain the duration for which the user reviews each of the images:
obtaining the facial information of the user, extracting the eye feature of the user from the facial information, analyzing the eye feature of the user, and obtaining the time when the user reviews each of the images to obtain and record the duration for which the user reviews each of the images.

6. The terminal according to claim 4 or 5, wherein the analysis recording unit is specifically arranged to analyse the eye feature of the user in the following manner so as to obtain the duration for which the user reviews each of the images:
detecting a location region, a center of a pupil, iris information and a line-of-sight direction of an eyeball in the eye feature through an eyeball recognition technique so as to perform analysis of the eye feature; and
obtaining the time when the user reviews each of the images according to the location region, the center of the pupil, the iris information and the line-of-sight direction of the eyeball in the eye feature, so as to obtain and record the duration for which the user reviews each of the images.

7. A computer program comprising program instructions which, when executed by a computer, cause the computer to execute the method for implementing image sequencing according to any one of claims 1 to 3.

8. A carrier carrying the computer program according to claim 7.
